Europäisches Patentamt

European Patent Office

Office européen des brevets

(19)

(11) Numéro de publication: **0 038 766**

A1

## DEMANDE DE BREVET EUROPEEN

(21) Numéro de dépôt: **81420058.0**

(22) Date de dépôt: **16.04.81**

(51) Int. Cl.³: **A 01 J 25/00**

(30) Priorité: **17.04.80 FR 8009051**

(43) Date de publication de la demande:
**28.10.81 Bulletin 81/43**

(84) Etats contractants désignés:
**AT BE CH DE GB IT LI LU NL SE**

(71) Demandeur: **Marquez, Emmanuel**
**24, rue de Grammont**
**F-42100 Saint-Etienne(FR)**

(71) Demandeur: **Dumas, Roland**
**41, boulevard Raoul Duval**
**F-42100 Saint-Etienne(FR)**

(71) Demandeur: **Dumas, Maurice**
**41, boulevard Raoul Duval**
**F-42100 Saint-Etienne(FR)**

(72) Inventeur: **Dumas, Roland**
**41, boulevard Raoul Duval**
**F-42100 Saint-Etienne(FR)**

(54) **Dispositif automatique autorisant la mise en pot de produits laitiers, tels que fromages frais.**

(57) Il comprend des plateaux (4) en deux éléments (5-6) assemblés temporairement en hauteur et séparés l'un de l'autre automatiquement; chaque plateau (4) présentant dans son épaisseur une série d'ouvertures disposées en rangées successives dans lesquelles sont engagées des faisselles vides (2); les dits plateaux disposés en superposition et en alignement dans une cuve de grande contenance, étant après remplissage des faisselles de liquide tel que lait, prélevés et acheminés un à un sur un système de convoyeur et de rails de guidage autorisant successivement la séparation des éléments constitutifs (5-6) du plateau, la séparation des faisselles (2) de leur support (5), et la mise en pots des faisselles.

L'invention peut être utilisée pour la fabrication de tous produits laitiers tels que fromages frais.

EP 0 038 766 A1

./...

FIG.5

DISPOSITIF AUTOMATIQUE AUTORISANT LA MISE EN POT DE PRODUITS  LAITIERS TELS QUE FROMAGES FRAIS

La présente invention a pour objet un dispositif autorisant la mise en oeuvre automatique et industrielle de la fabrication et de la mise en pot de produits laitiers tels que fromages frais et aliments similaires.

L'invention se rattache au secteur technique des produits laitiers, tels que fromages frais et à la mise en oeuvre de leur fabrication et conditionnement en pots.

Actuellement la fabrication de fromages frais s'opère de la façon suivante : on fabrique le caillé dans un récipient de grande contenance, puis lorsque le lait est complètement coagulé, à l'aide de louches, un opérateur prélève une quantité dosée du caillé du récipient et remplit des faisselles une à une au moyen des louches précitées. Ces faisselles sont ensuite prélevées une à une et positionnées à l'intérieur de pots généralement en appui sur un bossage surelevé formé à partir du fond des dits pots de manière à autoriser l'écoulement du petit lait dans le fond des dits pots. De ce fait, le petit lait qui irrigue le caillé dans la faisselle lui garantit une fraîcheur et sa conservation.

Le mode de fabrication et de mise en pot précité donne toute satisfaction actuellement, seulement compte tenu de l'importance de la consommation de fromages frais en pots, on comprend qu'un temps précieux est nécessaire au remplissage des faisselles une à une et à leur transport dans leur contenant.

D'autre part, les quantités de caillé prélevées à l'aide des louches ne sont jamais parfaitement les mêmes, et il s'avère souvent nécessaire que l'opérateur rajoute une quantité supplémentaire de caillé ou en prélève une partie dans la faisselle pour que la dose remplissant la faisselle corresponde dans les limites autorisées à celle indiquée sur les pots commercialisés.

On note également l'intervention manuelle des opérateurs renchérissant le prix de revient final.

Le but recherché selon l'invention était de trouver une solution supprimant les phases manuelles précitées tout en respectant les conditions de fabrication des fromages frais, en proposant une mise en oeuvre automatique et industrielle de la fabrication et du conditionnement des dits produits.

La solution trouvée au problème posé a nécessité l'adaptation des formes des faisselles en vue de leur manipulation lors de la mise en oeuvre automatique et industrielle du procédé de fabrication des fromages frais.

Selon une première caractéristique, le dispositif autorisant la mise en oeuvre automatique et industrielle de la fabrication et de la mise en pots de produits laitiers tels que fromages frais et aliments similaires, est remarquable en ce qu'il comprend des plateaux constitués de deux éléments pouvant être assemblés temporairement et séparés l'un de l'autre selon les phases de mise en oeuvre précitée, chaque plateau présentant dans son épaisseur une série d'ouvertures disposées en rangées successives dans lesquelles sont engagées des faisselles vides ; lesdits plateaux disposés en superposition et en alignement dans une cuve de grande contenance, étant après remplissage des faisselles de liquide tel que lait, prélevés et acheminés un à un sur un système de convoyeurs et de rails de guidage autorisant successivement la séparation des éléments constitutifs du plateau, la séparation des faisselles de leur support, et la mise en pots des faisselles.

Ces caractéristiques et d'autres encore ressortiront de la suite de la description.

Pour bien fixer l'objet de l'invention aux figures des dessins annexés où :

La figure 1 est une vue en perspective illustrant les éléments constitutifs du pot de fromage frais.

La figure 2 est une vue en coupe illustrant le positionnement de la faisselle dans le pot après fermeture.

La figure 3 est une vue en perspective illustrant un plateau dans lequel est engagé une multitude de faisselles prêtes à être remplies de lait.

La figure 4 est une vue en coupe selon la ligne brisée 4-4 de la figure 3.

La figure 5 est une vue à caractère schématique illustrant le dispositif avec ses différentes phases de mise en oeuvre selon l'invention.

La figure 6 est une vue de dessus du dispositif illustré figure 5.

La figure 7 est une vue en coupe transversale selon la ligne 7-7 de la figure 5.

La figure 8 est une vue en coupe transversale selon la ligne 8-8 de la figure 5.

La figure 9 est une vue à grande échelle illustrant le passage de la phase II à la phase III et jusqu'à la phase V correspondant à la séparation des éléments constitutifs du plateau.

La figure 10 est une vue à grande échelle illustrant le passage de la phase V à la phase VI correspondant à la séparation du support supérieur et des faisselles.

Afin de rendre plus concret l'objet de l'invention, on le décrit maintenant d'une manière non limitative illustrée aux figures des dessins.

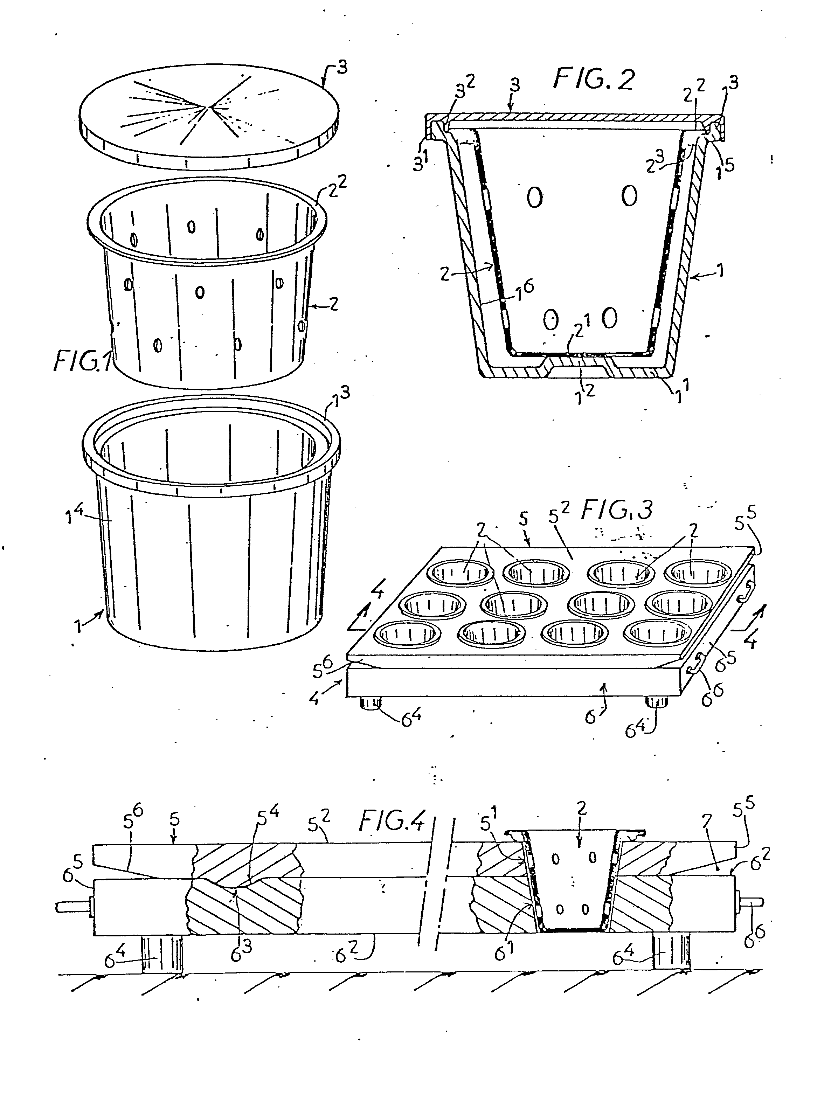

En se référant tout d'abord aux figures 1 et 2, on a référencé en $1$ le pot dans lequel est engagé la faisselle $2$ tandis qu'un couvercle $3$ assure la fermeture de l'ensemble. De manière connue, le pot $1$ présente intérieurement dans son fond $1^1$ un bossage $1^2$ sur lequel vient en appui la partie inférieure $2^1$ de la faisselle.

Selon une première caractéristique de l'invention, le pot présente dans sa partie supérieure une collerette $1^3$ dans laquelle s'engage les lèvres $3^1$ - $3^2$ du couvercle $3$. Cette collerette $1^3$ est légèrement déportée vers l'extérieure par rapport à la paroi périphérique $1^4$ du pot de manière à définir une couronne horizontale $1^5$ autorisant l'appui de la bordure périphérique supérieure $2^2$ de la faisselle. En outre, celle-ci présente dans la partie centrale de la bordure précitée un bourrelet périphérique de centrage $2^3$ venant en appui après engagement de la faisselle dans le pot contre la paroi intérieure $1^6$ de celui-ci. L'intérêt du bourrelet précité apparaîtra dans la suite de la description relative au dispositif de mise en oeuvre automatique.

Selon une deuxième caractéristique, on utilise des plateaux $4$ constitués de deux éléments définissant respectivement un support supérieur $5$ et un support inférieur $6$. Les plateaux ainsi constitués et illustrés notamment figures 3 et 4 présentent sur leur surface et dans leur épaisseur une série d'ouvertures disposées par rangées de préférence dans lesquelles sont engagées par un procédé mécanique les faisselles vides $2$. A cet effet, des ouvertures appropriées $5^1$ et $6^1$ sont ménagées sur chacun des supports précités $5$ - $6$, et sont profilés selon la forme extérieure de la faisselle. Chaque faisselle vient en appui de par son bourrelet $2^3$ sur la partie apparente $5^2$ du support $5$, et affleure par son fond avec la partie apparente $6^2$ du support inférieur $6$ (figure 4).

On a illustré à titre d'exemple figure 3, un mode de positionnement des rangées de faisselles. Avantageusement, on prévoit que les faisselles affleurent les unes des autres pour limiter au maximum des zones de plateaux non utilisées.

Le support supérieur $5$ présente sur sa face inférieure $5^3$ des parties proéminentes $5^4$ réparties sur la surface du plateau et venant s'ajuster dans des évidements $6^3$ profilés aux formes complémentaires établis sur la face supérieure $6^2$ du support inférieur 6, de façon à assurer leur assemblage et empêcher la mobilité du support supérieur par rapport au support inférieur.

Ce dernier présente en outre un piètement $6^4$ et sur ses chants transversaux $6^5$ des poignées $6^6$ de préhension ou équivalents.

En outre et selon une caractéristique importante, le support supérieur présente à partir de ses chants latéraux $5^5$ un chanfrein formant rampe $5^6$ inférieure, faisant donc apparaître une cavité 7, le long des côtés des supports en combinaison avec le bord latéral du support inférieur, dont l'intérêt apparaîtra ultérieurement.

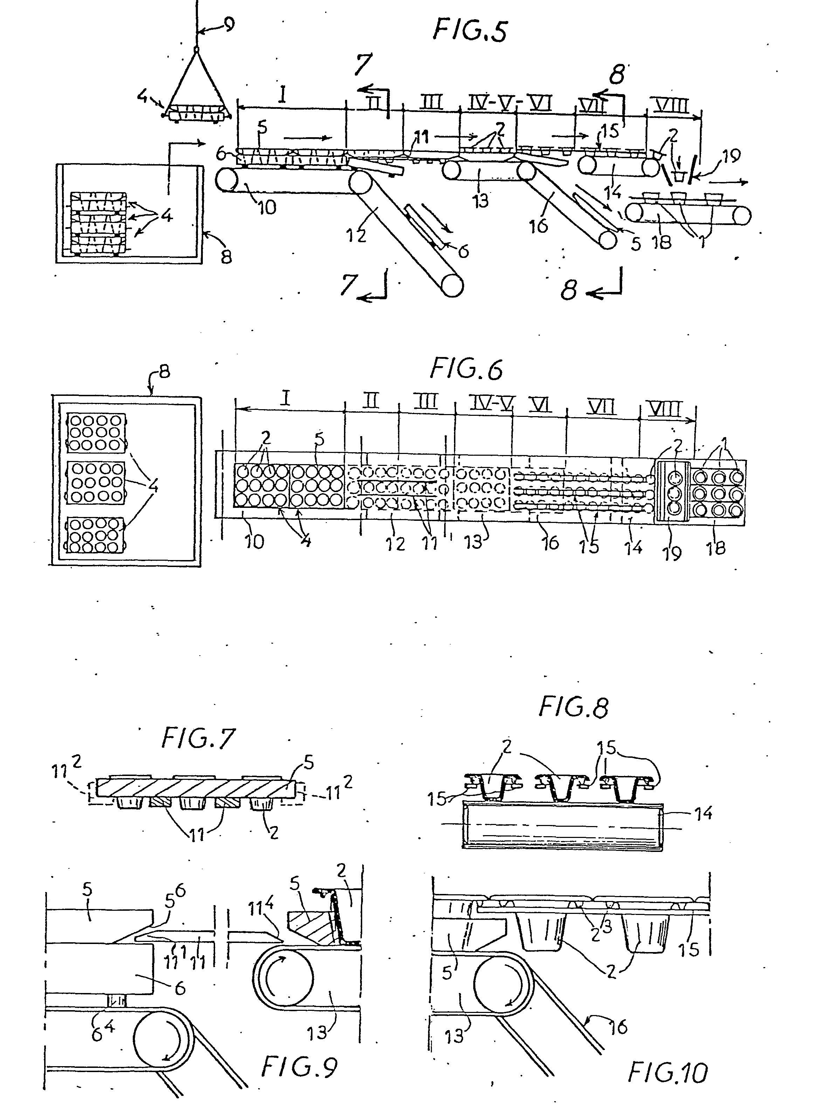

Il convient dès lors d'exposer le mécanisme de mise en oeuvre automatique pour la fabrication de fromages frais et de mise en pots, en se référant aux figures 5, 6, 7, 8, 9 et 10.

On dispose dans une cuve 8 de grande contenance une série de plateaux 4 montés en superposition et en alignement ; le piètement $6^4$ disposé sur le support inférieur d'un premier plateau vient en appui sur la paroi horizontale apparente $5^2$ du support supérieur constituant le deuxième plateau et ainsi de suite, faisant apparaître entre deux plateaux superposés un intervalle e correspondant en fait à la hauteur du piètement $6^4$.

L'ensemble des plateaux 4 est convenablement positionné à l'intérieur de la cuve 8. On effectue alors au moyen d'un distributeur approprié et non illustré, le remplissage de la cuve par du lait présure et autres. Le lait remplit de ce fait chacune des faisselles grâce notamment à l'intervalle e autorisant la circulation du fluide entre deux plateaux 4 superposés. Cette opération étant effectuée, des éléments de fixation solidaires de l'élément de levage 9 s'ajustent sur les poignées $6^6$ du support inférieur et autorisent sous l'actionnement de l'élément de levage, la préhension et le déplacement des plateaux 4 successivement jusqu'à un tapis roulant 10 commandé en déplacement par un moyen moteur approprié (phase I). On peut évidemment prévoir d'autres moyens autorisant le prélèvement et le transport des plateaux 4 sur le tapis roulant 10. Les plateaux 4 sont avancés automatiquement par l'intermédiaire du tapis roulant 10, en étant en butée les uns contre les autres jusqu'à une deuxième phase de traitement II.

Cette deuxième phase consiste à provoquer la séparation des éléments 5 et 6 constitutifs de chaque plateau 4. Pour ce faire, on prévoit au moins deux rails de guidage 11 dont les extrémités $11^1$ sont biseautées pour s'engager progressivement dans la cavité 7 et coopérer avec le chan-

frein $5^6$ formant rampe établi sur le bord du côté latéral du support supérieur provoquant de ce fait la séparation progressive des éléments 5 et 6. Avantageusement, les rails 11 ont un profil en L $11^2$ et sont disposés de part et d'autre des côtés du plateau, celui-ci venant en appui par ses bords longitudinaux sur les dits rails. En fait, la position des rails dépend de l'importance et de l'emplacement des zones de plateaux ne présentant pas d'ouvertures pour le positionnement des faisselles. Les extrémités $11^1$ des rails 11 se situent légèrement au-dessus de l'extrémité du tapis roulant 10. Tandis que les rails eux-mêmes sont disposés à un niveau surelevé d'une hauteur correspondant au moins à l'épaisseur du support inférieur. Selon une possibilité, les rails 11 sont convenablement positionnés de manière qu'ils s'engagent longitudinalement entre deux rangées longitudinales consécutives de faisselles. Comme illustré figure 5, lorsque le support supérieur d'un plateau est entièrement engagé et en appui sur les rails de guidage 11, le support inférieur 6 est acheminé au moyen d'un tapis roulant 12 vers une station de nettoyage.

En phase III, le support supérieur 5 est en appui sur les rails 11, tandis que les faisselles pleines 2 sont en appui et suspendues sur la face supérieure $5^2$ dudit support leur partie inférieure débordant par le bas. Il est à noter que la longueur des rails est inférieure à la longueur des plateaux de telle façon que ce soit les supports 5 consécutifs qui provoquent le déplacement du support supérieur 5 les précédant sur les rails.

En phase IV, comme illustré figure 9, les autres extrémités $11^4$ des rails précités viennent en appui ou sensiblement contre un tapis roulant 13. La poussée des supports 5 provoque l'engagement du premier support en appui progressif sur le tapis roulant 13. De ce fait, les faisselles 2 sont réajustées en position par rapport au support 5, leur partie supérieure devenant dégagée, et leur partie inférieure en appui sur le tapis roulant 13.

En phase V, on procède à l'avancement dans cette position du support supérieur et des faisselles.

La phase VI a pour objet la séparation des faisselles 2 par rapport au support 5. Pour cela, on prévoit comme illustré figures 5 et 10, une deuxième série de rails de guidage et de suspension 15, disposés à un niveau légèrement supérieur au niveau d'un tapis roulant 14, de manière à s'engager entre les rangées consécutives de faisselles 2. Les extrémités $15^1$ des rails débordent sur l'extrémité du tapis 13 de manière que les faisselles viennent progressivement en appui de par leur bourrelet $2^3$ en engagement et en suspension sur les rails. Après dégagement complet des

- 6 -

faisselles par rapport à leur support initial 5, celui-ci est convoyé vers une station de nettoyage au moyen de tapis roulant 16. Dans ce cas; le nombre de rails est le double du nombre de faisselles disposées en rangées latérales, comme illustré figure 8.

En phase VII, on procède à l'avancement dans cette position des faisselles en combinaison éventuellement avec d'autres moyens de guidage et d'avancement.

En phase VIII, on procède au positionnement des faisselles dans les pots 1. Ces derniers sont acheminés de façon appropriée par un tapis roulant 18 vers un poste 19 sur lequel débouche par le haut les rails de guidage et de suspension des faisselles. Celles-ci tombent par rangées successives tout en étant guidées par des moyens appropriés dans les pots en venant se positionner de la manière décrite précédemment. L'ensemble est ensuite acheminé pour d'autres opérations, telles que positionnement du couvercle etc...

On comprend bien les avantages de l'invention. La fabrication du fromage frais à lieu pendant le temps de transport des faisselles préalablement remplies de lait.

Il va s'en dire que le mode de réalisation précédemment décrit n'est nullement limitatif et est donné à titre d'exemple.

De même, on cite son intérêt pour la fabrication de fromage frais, mais il peut trouver d'autres applications pour des produits similaires.

L'invention ne se limite aucunement à celui de ses modes d'application non plus qu'à ceux des modes de réalisation de ses diverses parties ayant plus spécialement été indiquées ; elle en embrasse au contraire toutes les variantes.

REVENDICATIONS

1- Dispositif autorisant la mise en oeuvre automatique et industrielle de la fabrication et de la mise en pots de produits laitiers tels que fromages frais et aliments similaires, caractérisé en ce qu'il comprend des plateaux (4) constitués de deux éléments (5 - 6) pouvant être assemblés temporairement en hauteur et séparer l'un de l'autre selon les phases de mise en oeuvre précitées, chaque plateau (4) présentant dans son épaisseur une série d'ouvertures disposées en rangées successives dans lesquelles sont engagées des faisselles vides (2) ; les dits plateaux disposés en superposition et en alignement dans une cuve de grande contenance, étant après remplissage des faisselles de liquide tel que lait, prélevés et acheminés un à un sur un système de convoyeurs et de rails de guidage autorisant successivement la séparation des éléments constitutifs (5 - 6) du plateau, la séparation des faisselles (2) de leur support (5), et la mise en pots des faisselles.

2- Dispositif selon la revendication 1, caractérisé en ce que chaque pot (1) est adapté pour la mise en oeuvre du dispositif et présente dans sa partie supérieure une collerette ($1^3$) dans laquelle s'engage les lèvres ($3^1$ - $3^2$) du couvercle, ladite collerette ($1^3$) étant déportée vers l'extérieur pour définir une couronne horizontale ($1^5$) autorisant l'appui de la bordure périphérique supérieure ($2^2$) de la faisselle.

3- Dispositif selon les revendications 1 et 2 ensemble, caractérisé en ce que la faisselle présente dans la partie centrale de sa bordure périphérique supérieure ($2^2$) un bourrelet périphérique ($2^3$) présentant une triple fonction en permettant soit l'appui de la faisselle dans la partie supérieure du pot, soit l'appui de la faisselle sur la paroi horizontale extérieure de l'élément supérieur (5) constitutif du plateau (4), soit l'engagement de moyens servant à la séparation des faisselles du support supérieur (5).

4- Dispositif selon les revendications 1, 2 et 3 ensemble, caractérisé en ce que chaque plateau (4) est constitué de deux éléments (5 - 6) munis de moyens complémentaires ($5^3$ - $6^3$) autorisant leur assemblage temporaire ; l'élément (5) constituant le support supérieur présentant à partir de ses chants latéraux ($5^5$) un chanfrein formant rampe inférieure ($5^6$) définissant avec la bordure latérale du support inférieur (6) une cavité (8) autorisant l'engagement des rails de guidage provoquant la séparation progressive des dits éléments (5 et 6) par le déboîtement de leurs moyens de liaison.

5- Dispositif selon les revendications 1, 2, 3 et 4 ensemble, caractérisé en ce que le support inférieur (6) présente des moyens de préhension pour le levage des plateaux assemblés (4) par un élément mobile depuis la cuve (8) jusqu'à un tapis roulant horizontal (10) commandé en déplacement par un moteur, de manière à assurer successivement leur déplacement en translation jusqu'à la séparation de leurs éléments constitutifs (5 - 6).

6- Dispositif selon les revendications 1, 2, 3, 4 et 5 ensemble, caractérisé en ce que le moyen assurant la séparation des éléments (5 - 6) de chaque plateau (4) en fin de course de son déplacement en translation s'effectue par au moins deux rails de guidage (11) fixes dont les extrémités profilées coopèrent avec le chanfrein ($5^6$) de l'élément support (5) en vue d'assurer d'une part l'appui et le cheminement du dit élément (5) sur les rails précités (11) et d'autre part la séparation et l'acheminement de l'élément inférieur (6) sur un tapis roulant incliné (12) aboutissant à un poste de nettoyage.

7- Dispositif selon les revendications 1, 2, 3, 4, 5 et 6 ensemble, caractérisé en ce que chaque élément (5) se déplaçant sur les rails (11) présente ses faisselles pleines suspendues sur la face supérieure ($5^2$), tandis que leurs fonds débordent par le bas pour être sollicités en hauteur par un tapis roulant (13) décalé verticalement en vue du dégagement ascendant de leurs ouvertures supérieures par rapport au dit élément (5).

8- Dispositif selon les revendications 1, 2, 3, 4, 5, 6 et 7 ensemble, caractérisé en ce que les faisselles débordant en hauteur par rapport à l'élément (5) sont saisies par une série de rails de guidage et de suspension (15) coopérant avec leur bourrelet ($2^3$) en vue de leur extraction ascendante du dit élément (5) qui est évacué vers le bas par un tapis roulant incliné (16) aboutissant à un poste de nettoyage.

9- Dispositif selon les revendications 1, 2, 3, 4, 5, 6, 7 et 8 ensemble, caractérisé en ce que les faisselles suspendues sur les rails (15) avancent par l'intermédiaire d'un convoyeur (14) en vue de leur logement dans les pots (1) qui sont acheminés par un tapis roulant (18) vers un poste (19) dans lequel débouchent par le haut les extrémités des rails (15).

FIG.1

FIG.2

FIG.3

FIG.4

FIG.5

FIG.6

FIG.7

FIG.8

FIG.9

FIG.10

**0038766**

Numéro de la demande

EP 81 42 0058

**Office européen des brevets**

**RAPPORT DE RECHERCHE EUROPEENNE**

| DOCUMENTS CONSIDERES COMME PERTINENTS | | | CLASSEMENT DE LA DEMANDE (Int. Cl.³) |
|---|---|---|---|
| **Catégorie** | **Citation du document avec indication, en cas de besoin, des parties pertinentes** | **Revendication concernée** | |
| A | FR - A - 2 045 236 (CHANET) <br> * En entier * <br> -- | 1 | A 01 J 25/00 |
| A | FR - A - 1 313 172 (FILLOL) <br> * En entier * <br> -- | 1 | |
| A | FR - A - 2 082 779 (S.A. ENTREMONT-MARCILLAT) <br> * En entier * <br> -- | 1 | |
| A | FR - A - 1 527 855 (SOC. LAITIERE DU FOREZ) <br> * En entier * <br> -- | 1 | **DOMAINES TECHNIQUES RECHERCHES (Int. Cl.³)** <br><br> A 01 J |
| A | GB - A - 1 423 958 (CROCKATT AND SONS LTD.) <br> * Page 2, lignes 107-125; figure 1 * <br> -- | | |
| A | FR - A - 1 332 744 (BASTERT-WERKE G. BASTERT) <br> * En entier * <br><br> ----- | 1 | **CATEGORIE DES DOCUMENTS CITES** <br><br> X: particulièrement pertinent <br> A: arrière-plan technologique <br> O: divulgation non-écrite <br> P: document intercalaire <br> T: théorie ou principe à la base de l'invention <br> E: demande faisant interférence <br> D: document cité dans la demande <br> L: document cité pour d'autres raisons <br> &: membre de la même famille, document correspondant |

| Le présent rapport de recherche a été établi pour toutes les revendications | | |
|---|---|---|
| **Lieu de la recherche** <br> La Haye | **Date d'achèvement de la recherche** <br> 22-06-1981 | **Examinateur** <br> VERDOODT |

OEB Form 1503.1   06.78